# EUROPEAN PATENT SPECIFICATION

(11) **EP 3 379 036 B1**
(45) Date of publication and mention of the grant of the patent: **04.09.2024**
(21) Application number: 17162453.9
(22) Date of filing: 22.03.2017
(51) Int. Cl.: F01D 11/24, F02C 6/08, F02C 7/18

(54) **GAS TURBINE ENGINE**
GASTURBINENTRIEBWERK
MOTEUR À TURBINE À GAZ

(43) Date of publication of application: 26.09.2018
(73) Proprietor: Ansaldo Energia Switzerland AG, 5400 Baden (CH)
(72) Inventor: HUBER, Tobias Christoph, 79737 HERRISCHRIED (DE); BAUMANN, Andres Robert, 8702 ZOLLIKON (CH)
(74) Representative: Studio Torta S.p.A.

(56) References cited:
- EP-A1- 3 130 759
- EP-A2- 1 923 539
- JP-A- S63 159 626
- US-A1- 2010 175 387
- US-A1- 2011 299 978
- US-A1- 2014 133 956
- US-B2- 9 562 475

## Description

### TECHNICAL FIELD

The present invention relates to a gas turbine engine and to a method for cooling said gas turbine engine. The gas turbine engine can be adopted in a power plant.

### BACKGROUND

Gas turbine engines are known to comprise a compressor, a combustor plenum housing a combustion chamber and a turbine. In addition, they can also comprise a second combustion chamber (sequential combustion chamber) and a second turbine.

The turbine has an outer housing and comprises a stator and a rotor, which is rotatable within the stator. The stator and the rotor respectively comprise multiple stages of vanes and blades. The vanes are held on a turbine vane carrier. Between the outer housing and the turbine vane carrier a cooling plenum is defined.

During operation air is compressed in the compressor and directed through the combustor plenum into the combustion chamber, where a fuel is injected; compressed air and fuel are combusted in the combustion chamber generating the hot gas that is directed into the turbine, in particular through the hot gas duct thereof.

Since the thermal load on the combustion chamber and on the turbine is very high, cooling must take place.

The first turbine stage carries the highest thermal load and, in order to cool it, air is directed from the combustor plenum into the cooling plenum of the turbine and then through the vanes and blades.

During the transient operation (e.g. at start up) the turbine vane carrier and the rotor are heated by the hot compressed air contained in the cooling plenum and in the combustion plenum and expand; since the turbine vane carrier has a smaller thermal inertia than the rotor, the turbine vane carrier heats and expands faster than the rotor.

In known gas turbine engines, between the blades and the stator and between the vanes and the rotor, a gap is defined in order to allow expansion without interference in particular during transient.

Due to the faster expansion of the turbine vane carrier compared to the rotor and in order to prevent interference between the vane and the rotor and between the blade and the turbine vane carrier, the gaps must be very large; however, this can significantly affect the efficiency of the gas turbine engine.

Known gas turbine engines are also provided with a stiff element, generally a membrane, placed in the cooling plenum after the first blade stage with respect to the hot compressed air direction.

Another issue consequently arising from this condition is that the first turbine stage must be made of materials which can withstand high temperatures.

In view of the aforementioned, there is the need of avoiding such problems.

EP 1 923 539 A2 discloses a gas turbine having a compressor, a combustor and a high pressure turbine stage. Compressed air is extracted from a combustor plenum supplied by the compressor and is cooled in a heat exchanger. Cooled air is then injected into a cooling plenum defined between turbine outer and inner casings downstream of a first stage of turbine vanes with respect to a hot gas direction.

According to US 2014/133956 A1, in a gas turbine engine cooling air is fed from a combustor plenum into a cooling plenum and then to a first-stage guide vane of a turbine. A throttle valve allows to adjust mass flow to the cooling plenum. The throttle valve is in a throttling position at full-load and is opened at part-load to intensify diversion action of the guide vanes.

Other examples of known gas turbines are disclosed in JP S63 159626 A, EP 3 130 759 A1, US 2011/299978 A1, US 9 562 475 B2 and US 2010/175387 A1.

### SUMMARY

An aspect of the invention includes providing a gas turbine engine that allows to counteract the efficiency losses caused by the gaps existing between the blades and the stator and between the vanes and the rotor.

Another aspect of the invention includes providing a gas turbine engine that allows at least the first vane and/or the turbine vane carrier to be made of materials which have to withstand lower temperatures than in existing solutions.

These and further aspects are attained by providing a gas turbine engine in accordance with the accompanying claims.

### BRIEF DESCRIPTION OF THE DRAWINGS

Further characteristics and advantages will be more apparent from the description of a preferred but non-exclusive embodiment of the gas turbine engine, illustrated by way of non-limiting example in the accompanying drawings, in which:

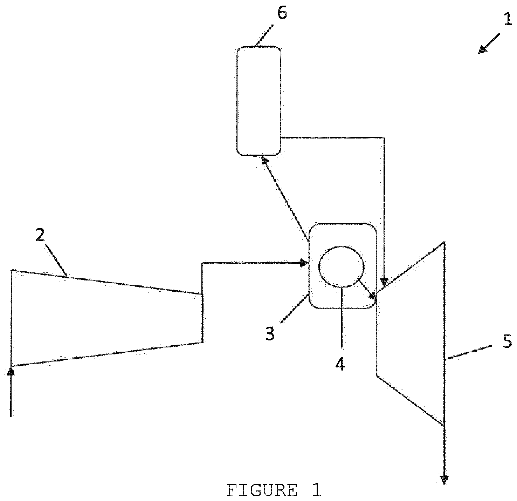

Figure 1 shows a schematic view of a gas turbine engine;
Figures 2 through 4 show different cross sections of the turbine.

### DETAILED DESCRIPTION OF EXEMPLARY EMBODIMENTS

With reference to the figures, these show a gas turbine engine 1 comprising a compressor 2, a combustor plenum 3 housing a combustion chamber 4 and a turbine 5. A heat exchanger 6 is also provided in the gas turbine engine 1, connected (hydraulically connected) between the compressor 2 and the turbine 5, in order to cool air extracted from the compressor 2 and directed into the turbine 5 for cooling purposes. For example, the attached figures show that air from the compressor 2 is directed into the combustor plenum 3 and from the combustor plenum 3 the air compressed at the compressor 2 is directed into the heat exchanger 6.

The gas turbine engine 1 can also have two combustion chambers in sequence with or without a high pressure turbine in between.

The turbine 5 has a stator 8, comprising an outer housing 7 and a turbine vane carrier 12, and a rotor 9. The stator 8 and the rotor 9 comprise multiple stages of vanes 10 and blades 11. The vanes 10 are held on the turbine vane carrier 12. Between the outer housing 7 and the turbine vane carrier 12, a cooling plenum 13 is defined.

Clearance gaps 14 are defined between the vanes 10 and the rotor 11 and between the blades 11 and the stator 8.

In accordance with the present invention, an annular element 15 is provided upstream a first stage vane 10A with respect to the hot gas direction G coming from the combustion chamber 4. The first stage vane 10A is provided at the inlet of the turbine 5. The position of the annular element 15 allows separation of the cooling plenum 13 from the combustor plenum 3, in order to prevent mixture of the air contained in the combustor plenum 3 with the air contained in the cooling plenum 13. The annular element 15 can either be a membrane or a supporting element, e.g. made of a metallic material.

In accordance with the invention, the heat exchanger 6 is hydraulically connected between the combustor plenum 3 and the cooling plenum 13.

With the wording membrane it has to be understood an element being separate from the outer housing 7 and from the turbine vane carrier 12 and connected to them. With the wording supporting element it has to be understood an element arranged to maintain the relative position between the turbine vane carrier 12 and the outer housing 7; for example the supporting element can be an element made in one piece and protruding from the turbine vane carrier 12 or from the outer housing 7.

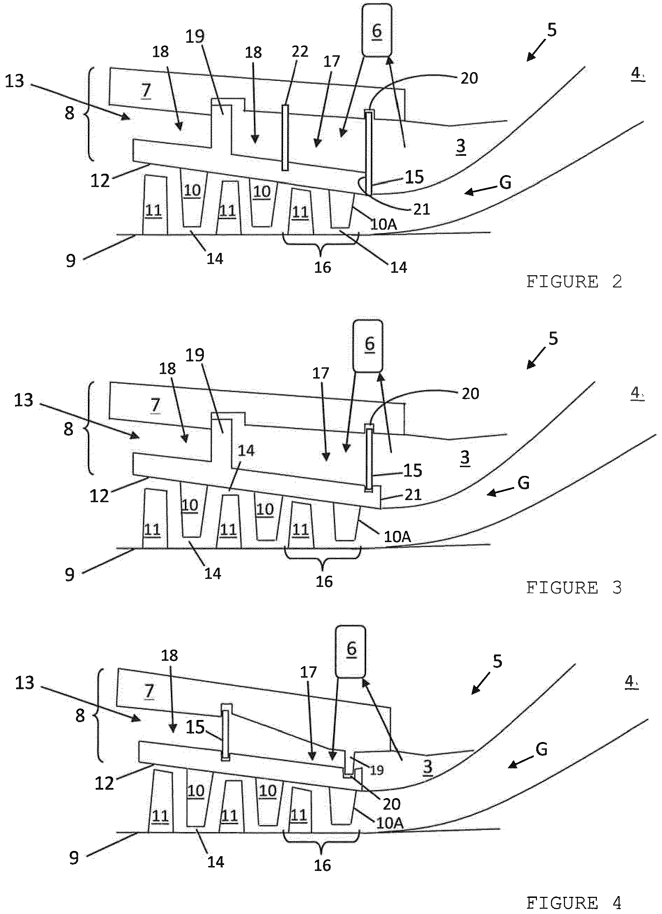

In a first embodiment of the invention as illustrated in figure 2, the annular element 15 is preferably a membrane housed within a groove 20 of the outer housing 7 and connected (e.g. bolted or screwed) to a wall 21 of the turbine vane carrier 12, wherein the wall 21 faces the combustor plenum 3. A supporting element 19 preferably protrudes from the turbine vane carrier 12 towards the outer housing 7 in the cooling plenum 13, after the first turbine stage 16 with respect to the hot gas direction G.

In a second embodiment of the invention illustrated in figure 3, the annular element 15 is housed both within a groove 20 of the outer housing 7 and in a groove 20 of the turbine vane carrier 12.

In a third embodiment of the invention as illustrated in figure 4, the annular element is a supporting element 19 protruding from the outer housing 7 in a groove 20 of the turbine vane carrier 12.

Naturally, either the supporting element or the annular element can be located at the upstream position, with reference to the hot gas direction G.

In all of the aforementioned embodiments, an additional annular element 22 can be placed in the cooling plenum 13, as exemplary shown in figure 2. For example, the additional annular element 22 can be an additional membrane and/or an additional supporting element.

When at least two annular elements are provided, e.g. one membrane and one supporting element such as in figures 3 and 4, and/or when additional annular elements 22 are provided in the cooling plenum 13 like in figure 2, zones at different pressure (and possibly temperature) can be defined in the cooling plenum 13.

In the attached figures with reference 17 zones at high pressure are indicated; e.g. compressed air in the high pressure zones 17 is supplied from the combustor plenum 3 (via the heat exchanger 6). In addition, with reference 18 zones at low pressure (lower than in the zones 17) are indicated; e.g. compressed air in the low pressure zones 18 is supplied from the compressor 2 at upstream stages of it (i.e. where air is only partly compressed). The operation of the gas turbine engine is apparent from that described and illustrated and is substantially the following.

When the gas turbine engine 1 is in operation, compressed air from the compressor 2 is supplied into the combustor plenum 3 and from here compressed air enters the combustor chamber 4 where it is combusted with a fuel; the hot gas generated in the combustion chamber 4 are thus directed into the turbine 5.

In addition, compressed air is directed from the combustor plenum 3 into the heat exchanger 6, where it is cooled down; from the heat exchanger 6 the cooled compressed air is directed into the cooling plenum 13, in particular at the high pressure zones 17; for example it is made to flow in the blades 11 and vanes 10 of the turbine 5 for cooling them. At the same time, compressed air extracted from upstream stages of the compressor is supplied into the low pressure zones 18 of the cooling plenum 13. Compressed air from the high pressure zones 17 and low pressure zones 18 is used for cooling.

The compressed air contained in the combustor plenum 3 is separated from (i.e. cannot mix with) the air contained in the cooling plenum 13 because of the annular element 15. Therefore, thanks to the cooling of the compressed air occurring in the heat exchanger 6, the compressed air contained in the cooling plenum 13 has a lower temperature than (i.e. it is cooler than) the air contained in the combustor plenum 3.

Thanks to the lower temperature of the air in the cooling plenum 13, the turbine vane carrier 12 undergoes a slower expansion; this way interference between the blades 11 and the stator 8 and between the vanes 10 and the rotor 9 is counteracted and the size of the gaps 14 can be made smaller; this allows a reduction of leakages through these gaps and therefore an increase of efficiency.

In practice the materials used and the dimensions can be chosen at will according to requirements and to the state of the art.

### REFERENCE NUMBERS

- 1: Gas turbine engine
- 2: Compressor
- 3: Combustor plenum
- 4: Combustion chamber
- 5: Turbine
- 6: Heat exchanger
- 7: Outer housing
- 8: Stator
- 9: Rotor
- 10: Vanes
- 10A: First stage vane
- 11: Blades
- 12: Turbine vane carrier
- 13: Cooling plenum
- 14: Gaps
- 15: Annular element
- 16: First turbine stage
- 17: High pressure zones
- 18: Low pressure zones
- 19: Supporting element
- 20: Groove
- 21: Wall
- 22: Additional annular element
- G: Hot gas direction

## Claims

1. A gas turbine engine (1) comprising a compressor (2), a combustor plenum (3) housing at least one combustion chamber (4), at least one turbine (5) having at least a first stage (16),
wherein the at least one turbine (5) comprises an outer housing (7) and a turbine vane carrier (12),
wherein a cooling plenum (13) for air is defined between the outer housing (7) and the turbine vane carrier (12),
and an annular element (15, 19) upstream of a vane (10A) of the first stage (16) with respect to the hot gas
direction (G) separating the cooling plenum (13) from the combustor plenum (3) and preventing mixture of the air contained in the combustor plenum (3) with the air contained in the cooling plenum (13);
**characterized by** a heat exchanger (6) hydraulically connected between the combustor plenum (3) and the cooling plenum (13), whereby air extracted from the combustor plenum (3) is cooled in the heat exchanger (6) and is directed into the cooling plenum (13).

2. The gas turbine engine (1) of claim 1, **characterized in that** the outer housing (7) comprises at least one groove (20) for housing the annular element (15, 19), the annular element (15, 19) being housed in the at least one groove (20).

3. The gas turbine engine (1) of claim 1, **characterized in that** the turbine vane carrier (12) comprises at least one groove (20) for housing the annular element (15, 19), the annular element (15, 19) being housed in the at least one groove (20).

4. The gas turbine engine (1) of claim 2, **characterized in that** the turbine vane carrier (12) comprises a wall (21) that faces the combustor plenum (3), the annular element (15, 19) being connected to the wall (21).

5. The gas turbine engine (1) of claims 1 or 3 or 4, **characterized in that** the annular element (15, 19) is a membrane (15).

6. The gas turbine engine (1) of claim 1, **characterized in that** the annular element (15, 19) is a supporting element (19).

7. The gas turbine engine (1) of claims 6, **characterized in that** the supporting element (19) protrudes from the turbine vane carrier (12).

8. The gas turbine engine (1) of claim 6, **characterized in that** the supporting element (19) protrudes from the outer housing (7).

9. The gas turbine engine (1) of claim 1, **characterized by** comprising an additional annular element (22) housed within the cooling plenum (13) and defining high pressure zones (17) and low pressure zones (18) in the cooling plenum (13), wherein the high pressure zones (17) are supplied with air form the combustor plenum (3) via the heat exchanger (6) and the low pressure zones (18) are supplied with air from upstream stages of the compressor (2).

## Patentansprüche

1. Gasturbinenmaschine (1), die einen Verdichter (2), eine Brenner-Sammelkammer (3), in der wenigstens eine Brennkammer (4) untergebracht ist, und wenigstens eine Turbine (5) mit wenigstens einer ersten Stufe (16) umfasst,
wobei die wenigstens eine Turbine (5) ein Außengehäuse (7) und einen Turbinenleitschaufelträger (12) umfasst,
wobei eine Kühl-Sammelkammer (13) für Luft zwischen dem Außengehäuse (7) und dem Turbinenleitschaufelträger (12) definiert ist,
sowie ein ringförmiges Element (15, 19) stromaufwärts einer Leitschaufel (10A) der ersten Stufe (16) in Bezug auf die Heißgasrichtung (G), das die Kühl-Sammelkammer (13) von der Brenner-Sammelkammer (3) trennt und eine Mischung der in der Brenner-Sammelkammer (3) enthaltenen Luft mit der in der Kühl-Sammelkammer (13) enthaltenen Luft verhindert;
**gekennzeichnet durch** einen Wärmetauscher (6), der hydraulisch zwischen der Brenner-Sammelkammer (3) und der Kühl-Sammelkammer (13) verbunden ist, wobei die aus der Brenner-Sammelkammer (3) abgezogene Luft in dem Wärmetauscher (6) gekühlt und in die Kühl-Sammelkammer (13) geleitet wird.

2. Gasturbinenmaschine (1) nach Anspruch 1, **dadurch gekennzeichnet, dass** das Außengehäuse (7) wenigstens eine Nut (20) zum Aufnehmen des ringförmigen Elements (15, 19) umfasst, wobei das ringförmige Element (15, 19) in der wenigstens einen Nut (20) aufgenommen ist.

3. Gasturbinenmaschine (1) nach Anspruch 1, **dadurch gekennzeichnet, dass** der Turbinenleitschaufelträger (12) wenigstens eine Nut (20) zum Aufnehmen des ringförmigen Elements (15, 19) umfasst, wobei das ringförmige Element (15, 19) in der wenigstens einen Nut (20) aufgenommen ist.

4. Gasturbinenmaschine (1) nach Anspruch 2, **dadurch gekennzeichnet, dass** der Turbinenleitschaufelträger (12) eine Wand (21) umfasst, die der Brenner-Sammelkammer (3) zugewandt ist, wobei das ringförmige Element (15, 19) mit der Wand (21) verbunden ist.

5. Gasturbinenmaschine (1) nach Anspruch 1 oder 3 oder 4, **dadurch gekennzeichnet, dass** das ringförmige Element (15, 19) eine Membran (15) ist.

6. Gasturbinenmaschine (1) nach Anspruch 1, **dadurch gekennzeichnet, dass** das ringförmige Element (15, 19) ein Stützelement (19) ist.

7. Gasturbinenmaschine (1) nach Anspruch 6, **dadurch gekennzeichnet, dass** das Stützelement (19) von dem Turbinenleitschaufelträger (12) hervorsteht.

8. Gasturbinenmaschine (1) nach Anspruch 6, **dadurch gekennzeichnet, dass** das Stützelement (19) von dem Außengehäuse (7) hervorsteht.

9. Gasturbinenmaschine (1) nach Anspruch 1, **dadurch gekennzeichnet, dass** sie ein zusätzliches ringförmiges Element (22) umfasst, das in der Kühl-Sammelkammer (13) aufgenommen ist und Hochdruckzonen (17) und Niederdruckzonen (18) in der Kühl-Sammelkammer (13) definiert, wobei die Hochdruckzonen (17) mit Luft aus der Brenner-Sammelkammer (3) über den Wärmetauscher (6) gespeist werden und die Niederdruckzonen (18) mit Luft aus stromaufwärts liegenden Stufen des Verdichters (2) gespeist werden.

## Revendications

1. Moteur à turbine à gaz (1) comprenant un compresseur (2), un caisson de système de combustion (3) qui contient au moins une chambre de combustion (4), au moins une turbine (5) ayant au moins un premier étage (16),
dans lequel la au moins une turbine (5) comprend un carter externe (7) et un support d'ailette de turbine (12),
dans lequel un caisson de refroidissement (13) destiné à l'air est défini entre le carter externe (7) et le support d'ailette de turbine (12),
et un élément annuaire (15, 19) en amont d'une ailette (10A) du premier étage (16) par rapport à la direction du gaz chaud (G) qui sépare le caisson de refroidissement (13) du caisson de système de combustion (3) et qui empêche le mélange de l'air contenu dans le caisson de système de combustion (3) avec l'air contenu dans le caisson de refroidissement (13) ;
**caractérisé par** un échangeur de chaleur (6) relié de manière hydraulique entre le caisson de système de combustion (3) et le caisson de refroidissement (13), moyennant quoi l'air extrait du caisson de système de combustion (3) est refroidi dans l'échangeur de chaleur (6) et est orienté vers le caisson de refroidissement (13).

2. Moteur à turbine à gaz (1) selon la revendication 1, **caractérisé en ce que** le carter externe (7) comprend au moins une rainure (20) destinée à contenir l'élément annulaire (15, 19), l'élément annulaire (15, 19) étant contenu dans la au moins une rainure (20).

3. Moteur à turbine à gaz (1) selon la revendication 1, **caractérisé en ce que** le support d'ailette de turbine (12) comprend au moins une rainure (20) destinée à contenir l'élément annulaire (15, 19), l'élément annulaire (15, 19) étant contenu dans la au moins une rainure (20).

4. Moteur à turbine à gaz (1) selon la revendication 2, **caractérisé en ce que** le support d'ailette de turbine (12) comprend une paroi (21) qui fait face au caisson de système de combustion (3), l'élément annulaire (15, 19) étant relié à la paroi (21).

5. Moteur à turbine à gaz (1) selon la revendication 1 ou 3 ou 4, **caractérisé en ce que** l'élément annuaire (15, 19) est une membrane (15).

6. Moteur à turbine à gaz (1) selon la revendication 1, **caractérisé en ce que** l'élément annulaire (15, 19) est un élément de support (19).

7. Moteur à turbine à gaz (1) selon la revendication 6, **caractérisé en ce que** l'élément de support (19) dépasse du support d'ailette de turbine (12).

8. Moteur à turbine à gaz (1) selon la revendication 6, **caractérisé en ce que** l'élément de support (19) dépasse du carter externe (7).

9. Moteur à turbine à gaz (1) selon la revendication 1, **caractérisé en ce qu'**il comprend un élément annulaire supplémentaire (22) contenu dans le caisson de refroidissement (13) et qui définit des zones à haute pression (17) et des zones à basse pression (18) dans le caisson de refroidissement (13), dans lequel les zones à haute pression (17) sont alimentées en air par le caisson de système de combustion (3) via l'échangeur de chaleur (6) et les zones à basse pression (18) sont alimentées en air par les étages amont du compresseur (2).
